# EUROPÄISCHE PATENTSCHRIFT

(11) **EP 1 527 241 B1**
(45) Veröffentlichungstag und Bekanntmachung des Hinweises auf die Patenterteilung: **20.12.2006**
(21) Anmeldenummer: 03790881.1
(22) Anmeldetag: 07.08.2003
(51) Int. Cl.: E04F 15/04, F16B 17/00

(54) **VORRICHTUNG ZUM VERBINDEN VON ZWEI PLATTENFÖRMIGEN PANEELEN**
DEVICE FOR CONNECTING TWO PLATE-SHAPED PANELS
DISPOSITIF D'ASSEMBLAGE DE DEUX PANNEAUX EN FORME DE DALLES

(30) Priorität: 09.08.2002 DE 10237397
(43) Veröffentlichungstag der Anmeldung: 04.05.2005
(73) Patentinhaber: Profilex GmbH, 15831 Gross-Kienitz (DE)
(72) Erfinder: WINDMÖLLER, Matthias, 33183 Oerlinghausen (DE); PORATH, Michael, 12305 Berlin (DE)
(74) Vertreter: Pfenning, Meinig & Partner GbR
(86) Internationale Anmeldenummer: PCT/EP2003/008783
(87) Internationale Veröffentlichungsnummer: WO 2004/020764

(56) Entgegenhaltungen:
- DE-A- 3 932 980
- DE-A- 10 044 016
- FR-A- 2 652 620
- GB-A- 614 394

## Beschreibung

Die Erfindung betrifft eine Vorrichtung nach dem Oberbegriff des Anspruchs 1.

Aus der WO 00/20706 ist eine Verbindung zwischen zwei Fußbodenplatten bekannt, bei der die Platten jeweils eine Nut auf der der jeweils anderen Platte zugewandten Seite sowie eine zu dieser Seite parallele und einen geringen Abstand von dieser aufweisende Nut auf der unteren Seite enthalten. Ein Verbindungselement verbindet die beiden Nuten auf der unteren Seite und greift in diese ein, und zwei Stege, die beim Zusammenfügen der Platten elastisch verformt werden, greifen jeweils in eine Nut auf den einander zugewandten Seiten der Platten ein. Hierdurch ist sichergestellt, dass die Platten sowohl in Richtung ihrer Ebene als auch in hierzu senkrechter Richtung gegenseitig fixiert sind. Jedoch besteht bei dieser Verbindung der Nachteil, dass die Montage des Verbindungselements erst am Ort der Fußbodenverlegung erfolgen kann, da aufgrund seiner Elastizität die Gefahr besteht, dass ein vorher an einem anderen Ort an einer Platte befestigtes Verbindungselement sich wieder löst und verloren geht oder beschädigt wird. Auch bereitet eine spätere Trennung der verbundenen Platten Schwierigkeiten, da diese nur möglich ist, wenn ein direkter Zugriff auf das Verbindungselement stattfindet. Dieser kann jedoch nur von der Fußbodenunterseite her erfolgen.

Die WO 01/98604 A1 offenbart eine Verbindung zwischen zwei Fußbodenplatten, bei der jede Platte auf der der jeweils anderen Platte zugewandten Seite ein Verbindungselement trägt. Beim Zusammenfügen der Platten greifen die unterschiedlich ausgebildeten Verbindungselemente ineinander, so dass die Platten zueinander fixiert werden. Die Montage der Verbindungselemente an den jeweiligen Platten ist bereits werkseitig möglich, indem Flansche an den Verbindungselementen in entsprechende Schlitze in den Platten eingeführt werden. Um jedoch eine dauerhafte Befestigung zu erzielen, müssen die Flansche in den Schlitzen festgeklebt werden. Hierdurch wird die Herstellung aufwendig. Ein zusätzlicher Aufwand ergibt sich dadurch, dass jeweils zwei Verbindungselemente für eine Verbindung erforderlich sind.

Die DE 39 32 980 A beschreibt die Herstellung von Wänden, Decken oder Böden aus Kunststoffschaumplatten, die jeweils durch in in den Seitenkanten der Platten ausgebildete Nuten eingreifende Federelemente miteinander verbunden sind. Die Nuten weisen Ausnehmungen auf für die Aufnahme von Widerhaken der Federelemente in der Weise, dass die in die Nuten eingerasteten Federelemente nicht mehr herausgezogen werden können. Eine Trennung der Platten ist somit nur durch Zerstörung der Federelemente möglich. Weiterhin liegen die Seitenkanten von zwei miteinander verbundenen Platten glatt aneinander an, so dass die Platten auch in der zur Plattenebene senkrechten Richtung nur durch die Federelemente gegeneinander fixiert sind. Daher ist die Gefahr von geringfügigen Versetzungen der Platten gegeneinander in dieser Richtung relativ groß, so dass die Ausbildung einer völlig ebenen Oberfläche Schwierigkeiten bereiten kann.

Schließlich zeigt die FR 2 652 620 A eine Verbindung von zwei Platten entlang jeweils einer Seitenkante mit drei ineinandergreifenden Verbindung-selementen. Jeweils ein Verbindungselement ist in eine entsprechend ausgebildete Nut in der Seitenkante jeder Platte eingesetzt und das federnde dritte Verbindungselement stellt eine unlösbare Verbindung zwischen den beiden anderen Verbindungselementen her. Auch hier ist eine Trennung der Platten nur durch Zerstörung eines Verbindungselements möglich. Ebenfalls werden die Platten in der zu ihrer Ebene senkrechten Richtung nur durch die elastischen Verbindungselemente gegeneinander fixiert.

Es ist daher die Aufgabe der vorliegenden Erfindung, eine Vorrichtung zum Verbinden von zwei plattenförmigen Paneelen entlang jeweils einer Seitenkante von diesen, bei der mindestens ein Verbindungselement mit elastischen Vorsprüngen für den eine gegenseitige Fixierung der Paneele in Richtung der von diesen gebildeten Ebene sowie in hierzu senkrechter Richtung sicherstellenden Eingriff mit in den Seitenkanten der beiden Paneele ausgebildeten Ausnehmungen vorgesehen ist, wobei der Eingriff zwischen mindestens einem der elastischen Vorsprünge des Verbindungselements und mindestens einer der Ausnehmungen in mindestens einem der Paneele nicht durch äußere Einwirkung lösbar ist, zu schaffen, bei der die miteinander verbundenen Paneele eine völlig glatte Oberfläche bilden. Außerdem soll eine Trennung der verbundenen Paneele ohne Zerstörung des Verbindungselements möglich sein.

Diese Aufgabe wird erfindungsgemäß gelöst durch eine Vorrichtung mit den Merkmalen jeweils des Anspruchs 1 oder des Anspruchs 2. Vorteilhafte Weiterbildungen der erfindungsgemäßen Vorrichtung ergeben sich aus den Unteransprüchen.

Dadurch, dass die eine der Seitenkanten eine horizontale Stufe und die andere der Seitenkanten eine horizontale Stufe derart aufweisen, dass durch deren gegenseitigen Eingriff eine gegenseitige Bewegung der beiden verbundenen Paneele in zumindest einer Richtung senkrecht zur Ebene der Paneele verhindert wird, sind die Paneele in dieser Richtung genau zueinander fixiert, so dass sichergestellt werden kann, dass die Paneele eine vollständige ebene Oberfläche bilden.

Weiterhin ist dadurch, dass der Eingriff zwischen dem Verbindungselement und einem der Paneele nach Verschwenken eines der beiden Paneele aus der Ebene der Verbundenen Paneele heraus durch eine Gleitbewegung zwischen dem Verbindungselement und dem einen der Paneele lösbar ist, bedingt durch die Flexibilität des Materials gewährleistet, dass einerseits die Paneele auf einfachste Weise wieder getrennt werden können und andererseits keine gegenseitigen Bewegungen der Paneele in ihrer Ebene oder senkrecht hierzu stattfinden können, so dass keine Fugen zwischen den verbundenen Paneele oder Absätze in der von ihnen gemeinsam gebildeten Oberfläche auftreten können.

Die Erfindung wird im Folgenden anhand von in den Figuren dargestellten Ausführungsbeispielen näher erläutert. Es zeigen:
- Fig. 1: ein erstes Ausführungsbeispiel der erfindungsgemäßen Vorrichtung,
- Fig. 2: ein zweites Ausführungsbeispiel der erfindungsgemäßen Vorrichtung, und
- Fig. 3: ein drittes Ausführungsbeispiel der erfindungsgemäßen Vorrichtung.

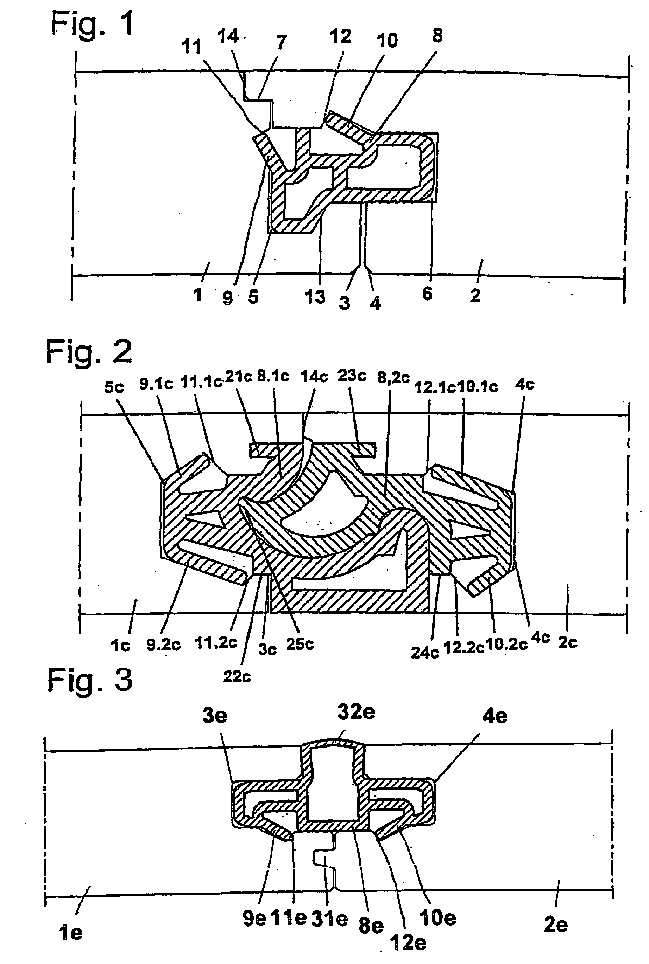

Fig. 1 zeigt zwei entlang jeweils einer Seitenkante miteinander verbundene Paneele 1 und 2, die beispielsweise als Fußbodenplatten, Wandplatten oder Deckenplatten verwendet werden und vorzugsweise vollständig oder überwiegend aus Holz, Holzfasern oder Holzspänen bestehen, wie HDF-, MDF-, Span- oder OSB-Platten sowie Massiv- oder kreuzverleimte Holzplatten (Parkett). Die Paneele 1 und 2 sind so miteinander verbunden, dass ihre oberen und unteren Oberflächen jeweils in einer Ebene liegen. Ihre einander zugewandten Seitenkanten 3 bzw. 4 sind abgestuft und bilden zudem jeweils eine Ausnehmung 5 bzw. 6. Zwei horizontal verlaufende Stufen 7 in der Seitenkante jedes Paneels 1 und 2 liegen fest einander an, so dass die oberen Oberflächen der Paneele 1 und 2 absatzlos ineinander übergehen.

In den von den beiden Seitenkanten 3 und 4 gebildeten Ausnehmungen 5 und 6 befindet sich ein Verbindungselement 8 aus Metall oder Kunststoff mit zwei zungenartigen elastischen Vorsprüngen 9 und 10. Der Vorsprung 9 liegt derart an einer Stufe 11 der Ausnehmung 5 an, dass das Paneel 2 gegenüber dem Paneel 1 nicht in vertikaler Richtung nach oben verschoben werden kann. Da die beiden Stufen 7 eine Verschiebung des Paneels 2 gegenüber dem Paneel 1 in vertikaler Richtung nach unten verhindern, sind die Paneele 1 und 2 in vertikaler Richtung nach oben und nach unten, d.h. senkrecht zu der von ihnen gebildeten Ebene, gegenseitig fixiert.

Der Vorsprung 10 liegt derart an einer Stufe 12 der Ausnehmung 6 an, dass das Verbindungselement 8 nicht aus der Ausnehmung 6 herausgezogen werden kann. Das Verbindungselement 8 ist so ausgebildet, dass der Vorsprung 10 abgedeckt und damit von außen nicht zugänglich ist, wenn das Verbindungselement 8 bis in die dargestellte Lage in die Ausnehmung 6 hineingeschoben ist. Somit kann der elastische Vorsprung 10 nicht von der Stufe 12 weggebogen werden, so dass der Eingriff zwischen dem Vorsprung 10 und der Stufe 12 nicht mehr lösbar ist, selbst wenn die Paneele 1 und 2 noch nicht miteinander verbunden sind (eine Lösung wäre nur in der Weise möglich, dass das Verbindungselement 8 in seiner Längsrichtung herausgezogen oder -geschoben wird).

Eine unter einem spitzen Winkel zur Vertikalen verlaufende Stufe 13 in der Seitenkante 3 des Paneels 1 liegt an einer in gleicher Richtung verlaufenden Flanke des Verbindungselements 8 an und verhindert hierdurch, dass das Paneel 1 in horizontaler Richtung von dem Verbindungselement 8 und damit auch von dem Paneel 2 weggezogen werden kann. Da die vertikalen Stufen 14 der Seitenkanten 3 und 4 fest aneinander anliegen, sind die Paneele 1 und 2 auch horizontal in beiden Richtungen gegeneinander fixiert, wobei ihre oberen Oberflächen fugenlos ineinander übergehen.

Die Ausnehmungen 5 und 6 befinden sich in vertikaler Richtung zwischen den oberen und unteren Oberflächen der Paneele 1 und 2, so dass das Verbindungselement 8 von diesen vollständig umschlossen ist.

Die Verbindung zwischen dem Paneel 2 und dem Verbindungselement 8 wird bereits werkseitig hergestellt, indem das Verbindungselement 8 in die Ausnehmung 6 geschoben wird, wobei der Vorsprung 10 elastisch verformt wird und nach Erreichen der Stufe 12 vor diese zurückschnellt, so dass das Verbindungselement 8 mit dem Paneel 2 unlösbar verriegelt ist. Ein Teil der fest an der Seitenkante 4 anliegenden Oberfläche des Verbindungselements 8 weist zahnförmige Erhebungen auf, so dass trotz Fertigungstoleranzen ein fester Passsitz erzielt wird.

Zur Verbindung der Paneele 1 und 2 wird das Paneel 2 mit dem angesetzten Verbindungselement 8 senkrecht von oben so gegen das Paneel 1 gedrückt, dass der untere ausgewölbte Teil des Verbindungselements 8 in die Ausnehmung 5 gelangt. Wenn er gegen die untere Begrenzungsfläche der Ausnehmung 5 stößt, wird auch der elastisch verformte Vorsprung 9 freigegeben, so dass dieser vor die Stufe 11 gelangt und somit eine Bewegung des Paneels 2 in umgekehrter Richtung, d.h. in Bezug auf das Paneel 1 senkrecht nach oben verhindert. Da gleichzeitig die Stufen 7 beider Seitenkanten 3 und 4 aufeinander treffen, sind die Paneele 1 und 2 vertikal in beiden Richtungen miteinander verriegelt.

Eine Lösung der Verbindung zwischen den Paneelen 1 und 2 ist möglich, wenn eines der Paneele gegenüber dem anderen etwa in Richtung des Verlaufs der Stufe 13 bewegt wird. Das Verbindungselement 8 verformt sich elastisch in geringem Maße, so dass der Vorsprung 9 entlang der Stufe 11 gleiten kann, bis er von dieser freigegeben wird. Die Paneele 1 und 2 lassen sich auf diese Weise leicht voneinander trennen.

Das Verbindungselement 8 ist hier vorzugsweise ein Kunststoff-Extrusions- oder Spritzgießteil mit sich in seiner Längsrichtung erstreckenden Kanälen.

Bei der Ausbildung nach Fig. 2 sind diejenigen Teile, die denen bei der Ausführungsform nach Fig. 1 entsprechen, mit denselben Bezugszahlen und dem Zusatz "c" gekennzeichnet. Vorsprung 16a in der Weise, dass beim Zusammenfügen der beiden Paneele 1a und 2a diese schräg zueinander bewegt werden müssen, damit der Vorsprung 16a in die Ausnehmung 15a gelangt. Diese Bewegung ist beendet, wenn die vertikalen Stufen 14a beider Seitenkanten 3a und 4a aneinander stoßen. Die Paneele 1a und 2a sind dann in horizontaler und vertikaler Richtung gegeneinander verriegelt. Beim Trennen der Paneele 1a und 2a werden diese in entgegengesetzter Richtung wie beim Zusammenfügen gegeneinander bewegt.

Bei der Verbindungsvorrichtung nach Fig. 3 sind die Teile, die denen bei der Ausführung nach Fig. 1 entsprechen, mit denselben Bezugszahlen und dem Zusatz "b" gekennzeichnet. Nach Fig. 3 überlappen die Seitenkanten 3b und 4b in horizontaler Richtung einander nicht, so dass sie nicht zu einer gegenseitigen Verriegelung der Paneele 1b und 2b in vertikaler Richtung beitragen können. Diese Funktion übernehmen zwei horizontale Vorsprünge 17b und 18b des Verbindungselements 8b, die jeweils in eine komplementäre Vertiefung 19b bzw. 20b in der Seitenkante 3b bzw. 4b eingreifen. Da diese Verriegelung in beiden einander entgegensetzen Richtungen wirkt, werden hierfür der ' elastische Vorsprung 9b und die Stufe 11b nicht benötigt. Diese haben vielmehr für das Paneel 1b die gleiche Funktion wie der Vorsprung 10b und die Stufe 12b für das Paneel 2b, d.h. das Paneel 1b wird horizontal gegen das mit dem Verbindungselement 8b versehene Paneel 2b geschoben, wodurch der Vorsprung 9b verformt wird und dann durch die Stufe 11b freigegeben wird und damit das Paneel 1b gegen eine entgegengesetzte horizontale Bewegung sperrt. Da gleichzeitig die vertikalen Stufen 14b beider Seitenkanten 3b und 4b zusammenstoßen, sind beide Paneele in horizontaler und vertikaler Richtung gegeneinander verriegelt.

In Fig. 2 besteht das Verbindungselement aus zwei Teilen 8.1c und 8.2c, wobei das Teil 8.1c mittels Vorsprüngen 9.1c und 9.2c und Stufen 11.1c und 11.2c nicht lösbar mit dem Paneel 1c und das Teil 8.2c mittels Vorsprüngen 10.1c und 10.2c sowie Stufen 12.1c und 12.2c nicht lösbar mit dem Paneel 2c in Eingriff sind. Hier besteht keine horizontale Überdeckung der Seitenkanten 3c und 4c, d.h. die vertikale Verriegelung der Paneele 1c und 2c erfolgt ausschließlich über die Teile 8.1c und 8.2c des Verbindungselements. Das Teil 8.1c selbst ist mit dem Paneel 1c durch einen in eine Vertiefung der Ausnehmung 5c ragenden Vorsprung 21c und einen Anschlag 22c in vertikaler Richtung verriegelt, während das Teil 8.2c für eine entsprechende Verriegelung mit dem Paneel 2c einen Vorsprung 23c und einen Anschlag 24c aufweist. Beide Teile 8.1c und 8.2c des Verbindungselements sind somit starr und nicht lösbar mit dem jeweils zugehörigen Paneel 1c bzw. 2c verbunden.

Zur Verbindung der Paneele 1c und 2c werden die Teile 8.1c und 8.2c miteinander in Eingriff gebracht. Das Teil 8.2c weist hierzu einen schnabelförmig geschwungenen Vorsprung 25c und das Teil 8.1c eine entsprechende Ausnehmung auf. Durch eine Schwenkbewegung der Paneele 1c und 2c gegeneinander kann dieser Eingriff hergestellt und durch eine entgegengesetzte Schwenkbewegung auch wieder gelöst werden. Während des Eingriffs sind, wie Fig. 2 zeigt, die Paneele 1c und 2c hin horizontaler wie auch in vertikaler Richtung gegeneinander verriegelt.

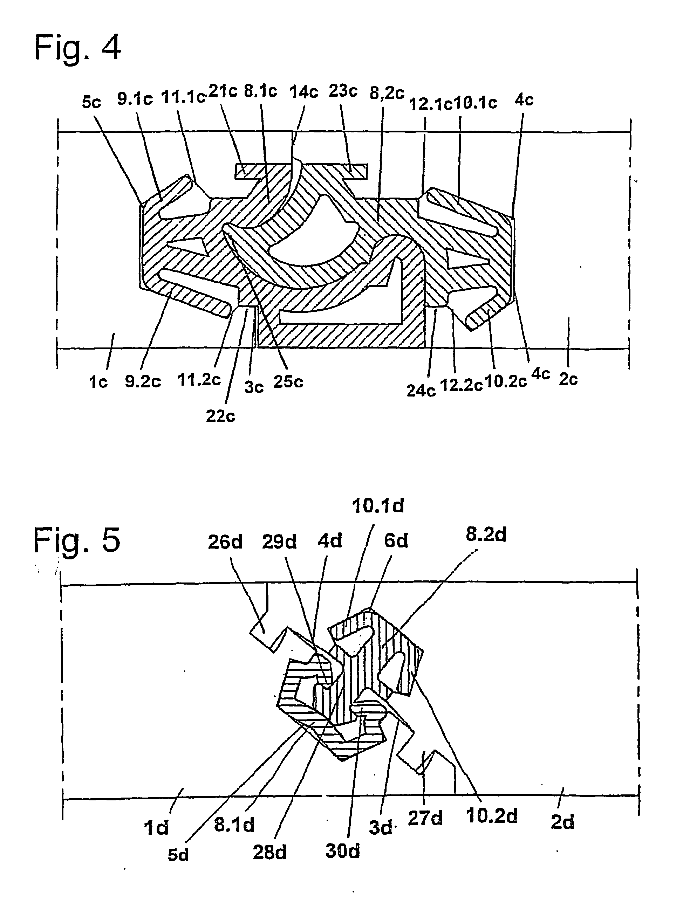

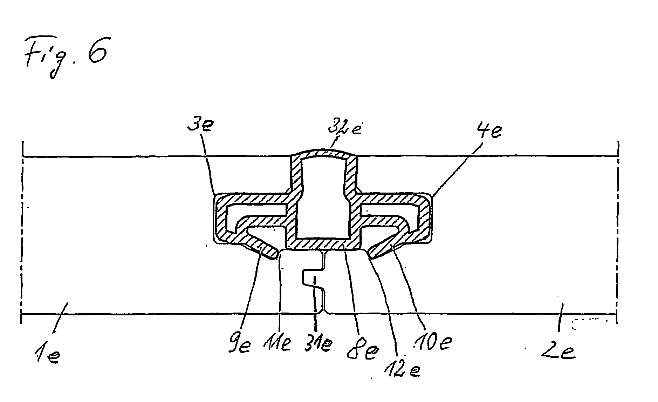

Gemäß Fig. 5 bildet die Seitenkante 4d des Paneels 2d zwei schräg verlaufende Vorsprünge 26d und 27d, die in komplementäre Vertiefungen in der Seitenkante 3d des Paneels 1d hineinragen und so eine gegenseitige Verriegelung der Paneele 1d und 2d in horizontaler und vertikaler Richtung bewirken. Um zu verhindern, dass durch eine relative Schrägbewegung die Vorsprünge 26d und 27d aus ihren Vertiefungen herausgleiten, ist ein aus zwei Teilen 8.1d und 8.2d bestehendes Verbindungselement vorgesehen. Das Teil 8.1d ist elastisch, so dass es unter elastischer Verformung durch die Öffnung der Ausnehmung 5d hindurch in diese eingesetzt werden und sich in der Ausnehmung 5d so spreizen konnte, dass es in unlösbarem Eingriff mit dieser steht. In entsprechender Weise wurde das Teil 8.2d unter elastischer Verformung der Vorsprünge 10.1d und 10.2d in die Ausnehmung 6d des Paneels 2d eingesetzt und durch anschließende Spreizung der Vorsprünge 10.1d und 10.2d in unlösbaren Eingriff mit der Ausnehmung 6d gebracht.

Das Teil 8.2d ist mit einem aus der Ausnehmung 6d herausragenden Stempel 28d versehen. Das Teil 8.1d weist einen Hohlraum zur Aufnahme des Stempels 28d auf, wobei der Durchlass zu dem Hohlraum durch zwei elastische Vorsprünge 29d und 30d so begrenzt ist, dass er enger als die größte Breite des konischen Stempelkopfes ist.

Zum Verbinden der Paneele 1d und 2d werden diese so zueinander bewegt, dass die Vorsprünge 26d und 27d in ihre zugeordneten Vertiefungen und auch der Kopf des Stempels 28d unter Auseinanderspreizen der Vorsprünge 29d und 30d in den Hohlraum des Teils 8.1d eintreten. Nachdem der Stempelkopf die Vorsprünge 29d und 30d passiert hat, werden die Vorsprünge 29d und 30d frei-Gemäß Figur 3 werden die beiden Paneele 1e und 2e durch einen Vorsprung 31e in der Seitenkante 4e des Paneels 2e und eine komplementäre Vertiefung in der Seitenkante 3e des Paneels 1e in vertikaler Richtung gegeneinander fixiert, und die horizontale Fixierung erfolgt durch das Verbindungselement 8e, das über den elastischen Vorsprung 9e mit der Stufe 11e des Paneels 1e und über den elastischen Vorsprung 10e mit der Stufe 12e des Paneels 2e in Eingriff ist. Auf der Sichtseite bilden die miteinander verbundenen Paneele 1e und 2e eine Fuge, in der ein komplementär ausgebildeter Teil 32e des Verbindungselements 8e aufgenommen ist. Der Teil 32e endet bündig mit der Sichtfläche der Paneele 1e und 2e, so dass er von außen sichtbar ist und somit der Sichtfläche ein ästhetisch ansprechendes Muster verleiht.

## Patentansprüche

1. Vorrichtung zum Verbinden von zwei plattenförmigen Paneelen (1, 2) entlang jeweils einer Seitenkante (3, 4) von diesen, bei der mindestens ein Verbindungselement (8) mit elastischen Vorsprüngen (10, 11) für den eine gegenseitige Fixierung der Paneele (1, 2) in Richtung der von diesen gebildeten Ebene sowie in hierzu senkrechter Richtung sicherstellenden Eingriff mit in den Seitenkanten (3, 4) der beiden Paneele (1, 2) ausgebildeten Ausnehmungen (5, 6) vorgesehen ist, wobei der Eingriff zwischen mindestens einem der elastischen Vorsprünge (10) des Verbindungselements (8) und mindestens einer der Ausnehmungen (5, 6) in mindestens einem der Paneele (1, 2) nicht durch äußere Einwirkung lösbar ist,
**dadurch gekennzeichnet,**
**dass** die eine der Seitenkanten (3, 4) eine horizontale Stufe (7) und die andere der Seitenkanten (3, 4) eine horizontale Stufe (7) derart aufweisen, dass durch deren gegenseitigen Eingriff eine gegenseitige Bewegung der beiden verbundenen Paneele (1, 2) in zumindest einer Richtung senkrecht zur Ebene der Paneele (1, 2) verhindert wird.

2. Vorrichtung zum Verbinden von zwei plattenförmigen Paneelen (1, 2) entlang jeweils einer Seitenkante (3, 4) von diesen, bei der mindestens ein Verbindungselement (8) mit elastischen Vorsprüngen (10, 11) für den eine gegenseitige Fixierung der Paneele (1, 2) in Richtung der von diesen gebildeten Ebene sowie in hierzu senkrechter Richtung sicherstellenden Eingriff mit in den Seitenkanten (3, 4) der beiden Paneele (1, 2) ausgebildeten Ausnehmungen (5, 6) vorgesehen ist, wobei der Eingriff zwischen mindestens einem der elastischen Vorsprünge (10) des Verbindungselements (8) und mindestens einer der Ausnehmungen (5, 6) in mindestens einem der Paneele (1, 2) nicht durch äußere Einwirkung lösbar ist, **dadurch gekennzeichnet, dass** der Eingriff zwischen dem Verbindungselement (8) und einem der Paneele (1, 2) nach Verschwenken eines der beiden Paneele (1, 2) aus der Ebene der verbundenen Paneele (1, 2) heraus durch eine Gleitbewegung zwischen dem Verbindungselement (8) und dem einen der Paneele (1, 2) lösbar ist.

3. Vorrichtung nach Anspruch 1 oder 2, **dadurch gekennzeichnet, dass** der Eingriff zwischen dem mindestens einen elastischen Vorsprung (10) des Verbindungselements (8) und dem mindestens einen der Paneele (1, 2) nicht von außen zugänglich ist.

4. Vorrichtung nach einem der Ansprüche 1 bis 3, **dadurch gekennzeichnet, dass** die Ausnehmung (6) in mindestens einem der Paneele (1, 2) mindestens eine Stufe (12) aufweist, die mit einem elastischen Vorsprung des in die Ausnehmung eingeführten Verbindungselements so in Eingriff ist, dass ein Herausziehen des Verbindungselements entgegen der Einführungsrichtung verhindert wird.

5. Vorrichtung nach einem der Ansprüche 1 bis 4, **dadurch gekennzeichnet, dass** jedes der Paneele (1, 2) ein mit einer Ausnehmung (5, 6) in diesem in nicht lösbarem Eingriff stehendes Verbindungselement (8.1, 8.2) aufweist und zur Verbindung der Paneele (1, 2) die Verbindungselemente (8.1, 8.2) in gegenseitigem Eingriff stehen.

6. Vorrichtung nach einem der Ansprüche 1 bis 5, **dadurch gekennzeichnet, dass** das Verbindungselement (8) aus Metall besteht.

7. Vorrichtung nach einem der Ansprüche 1 bis 5, **dadurch gekennzeichnet, dass** das Verbindungselement (8) aus Kunststoff besteht.

8. Vorrichtung nach Anspruch 7, **dadurch gekennzeichnet, dass** das Verbindungselement (8) ein Extrusions- oder Spritzgießteil ist, das in seiner Längsrichtung verlaufende Kanäle enthält.

9. Vorrichtung nach einem der Ansprüche 1 bis 8, **dadurch gekennzeichnet, dass** die Paneele (1, 2) Fußboden-, Wand- oder Deckenplatten sind.

10. Vorrichtung nach einem der Ansprüche 1 bis 9, **dadurch gekennzeichnet, dass** die Paneele (1, 2) im miteinander verbundenen Zustand zumindest auf einer von außen sichtbaren Fläche eine Fuge bilden, in der ein komplementär ausgebildeter Teil des Verbindungselements von außen sichtbar aufgenommen ist.

## Claims

1. Device for connecting two plate-shaped panels (1, 2) along one side edge (3, 4) of each of these, in which device there is at least one connecting element (8) with flexible projections (10, 11) for engagement - securing the reciprocal location of the panels (1, 2) in the direction of the plane formed by them and in the direction perpendicular to it - with recesses (5, 6) formed in the side edges (3, 4) of the two panels (1, 2), the engagement between at least one of the flexible projections (10) of the connecting element (8) and at least one of the recesses (5, 6) in at least one of the panels (1, 2) being incapable of being released by outside actions,
**characterised in that**
one of the side edges (3, 4) has a horizontal step (7), and the other side edge (3, 4) has a horizontal step (7) in such a manner that, as a result of the reciprocal engagement of the latter, a reciprocal movement of the two connected panels (1, 2) in at least one direction perpendicular to the plane of the panels (1, 2) is prevented.

2. Device for connecting two plate-shaped panels (1, 2) along one side edge (3, 4) of each of these, in which device there is at least one connecting element (8) with flexible projections (10, 11) for engagement - securing the reciprocal location of the panels (1, 2) in the direction of the plane formed by them and in the direction perpendicular to it - with recesses (5, 6) formed in the side edges (3, 4) of the two panels (1, 2), the engagement between at least one of the flexible projections (10) of the connecting element (8) and at least one of the recesses (5, 6) in at least one of the panels (1, 2) being incapable of being released by outside actions,
**characterised in that**
the engagement between the connecting element (8) and one of the panels (1, 2) can be released after swivelling one of the two panels (1, 2) from out of the plane of the connected panels (1, 2) by means of a sliding movement between the connecting element (8) and one of the panels (1, 2).

3. Device as in claim 1 or 2,
**characterised in that**
the engagement between the at least one flexible projection (10) of the connecting element (8) and at least one of the panels (1, 2) is not accessible from outside.

4. Device as in one of claims 1 to 3,
**characterised in that**
the recess (6) in at least one of the panels (1, 2) has at least one step (12) which engages with a flexible projection of the connecting element that has been introduced into the recess, in such a manner that pulling out the connecting element in the opposite direction to the direction of introduction is prevented.

5. Device as in one of claims 1 to 4,
**characterised in that**
each of the panels (1, 2) has a connecting element (8.1, 8.2) which is in non-separable engagement with a recess (5, 6) in the panel and, to connect the panels (1, 2), the connecting elements (8.1, 8.2) are in a condition of reciprocal engagement.

6. Device as in one of claims 1 to 5,
**characterised in that**
the connecting element (8) is made of metal.

7. Device as in one of claims 1 to 5,
**characterised in that**
the connecting element (8) is made of plastic.

8. Device as in claim 7,
**characterised in that**
the connecting element (8) is an extruded or injection moulded component which has channels that run along its length.

9. Device as in one of claims 1 to 8,
**characterised in that**
the panels (1, 2) are floor, wall or ceiling plates.

10. Device as in one of claims 1 to 9,
**characterised in that**
the panels (1, 2), when in the mutually connected state, form a joint at least on one externally visible surface, in which joint is held, in an externally visible manner, a complementarily shaped part of the connecting element.

## Revendications

1. Dispositif d'assemblage de deux panneaux en forme de dalles (1, 2) le long respectivement d'une arête latérale (3, 4) de ces derniers, dans lequel est prévu au moins un élément d'assemblage (8) comportant des saillies élastiques (10, 11) pour l'engrènement avec des creux (5, 6) formés dans les arêtes latérales (3, 4) des deux panneaux (1, 2) assurant une fixation mutuelle des panneaux (1, 2) dans la direction du plan formé par ces derniers ainsi que dans la direction perpendiculaire à ce plan, l'engrènement entre au moins une des saillies élastiques (10) de l'élément d'assemblage (8) et au moins un des creux (5, 6) dans au moins un des panneaux (1, 2) n'étant pas détachable par une action externe,
**caractérisé en ce que**
l'une des arêtes latérales (3, 4) présente un niveau horizontal (7) et l'autre arête latérale (3, 4) présente un niveau horizontal (7) de manière à empêcher par leur engrènement réciproque un mouvement réciproque des deux panneaux assemblés (1, 2) dans au moins une direction perpendiculaire au plan du panneau (1, 2).

2. Dispositif d'assemblage de deux panneaux en forme de dalles (1, 2) le long respectivement d'une arête latérale (3, 4) de ces derniers, dans lequel est prévu au moins un élément d'assemblage (8) comportant des saillies élastiques (10, 11) pour l'engrènement avec les creux (5, 6) formés dans les arêtes latérales (3, 4) des deux panneaux (1, 2) assurant une fixation mutuelle des panneaux (1, 2) dans la direction du plan formé par ces derniers ainsi que dans la direction perpendiculaire à ce plan, l'engrènement entre au moins une des saillies élastiques (10) de l'élément d'assemblage (8) et d'au moins un des creux (5, 6) dans au moins un des panneaux (1, 2) n'étant pas détachable par une action externe, **caractérisé en ce que** l'engrènement entre l'élément d'assemblage (8) et l'un des panneaux (1, 2) est détachable après balayage horizontal d'un des panneaux (1, 2) hors du niveau des panneaux reliés (1, 2) par un déplacement coulissant entre l'élément d'assemblage (8) et l'un des panneaux (1, 2).

3. Dispositif selon la revendication 1 ou 2, **caractérisé en ce que** l'engrènement entre au moins une des saillies élastiques (10) de l'élément d'assemblage (8) et au moins un des panneaux (1, 2) n'est pas accessible de l'extérieur.

4. Dispositif selon l'une quelconque des revendications 1 à 3, **caractérisé en ce que** le creux (6) dans au moins un des panneaux (1, 2) présente au moins un niveau (12) qui est en prise avec une saillie élastique de l'élément d'assemblage introduit dans le creux, de manière à empêcher une extraction de l'élément d'assemblage dans le sens inverse de la direction d'introduction.

5. Dispositif selon l'une quelconque des revendications 1 à 4, **caractérisé en ce que** chacun des panneaux (1, 2) présente un élément d'assemblage (8.1, 8.2) en contact non amovible avec un creux (5, 6) et sont en contact réciproque avec les éléments d'assemblage (8.1, 8.2) pour l'assemblage des panneaux (1, 2).

6. Dispositif selon l'une quelconque des revendications 1 à 5, **caractérisé en ce que** l'élément d'assemblage (8) est en métal.

7. Dispositif selon l'une quelconque des revendications 1 à 5, **caractérisé en ce que** l'élément d'assemblage (8) est en matière plastique.

8. Dispositif selon la revendication 7, **caractérisé en ce que** l'élément d'assemblage (8) est une pièce en plastique extrudé ou injecté qui comporte des canaux dans le sens de sa longueur.

9. Dispositif selon l'une quelconque des revendications 1 à 8, **caractérisé en ce que** les panneaux (1, 2) sont des dalles de sol, de mur ou de plafond.

10. Dispositif selon l'une quelconque des revendications 1 à 9, **caractérisé en ce que** les panneaux (1, 2) liés les uns aux autres sur une surface visible de l'extérieur forment une jonction dans laquelle est accueillie de manière visible de l'extérieur une partie de l'élément d'assemblage formée complémentairement.
